(19) Europäisches Patentamt
European Patent Office
Office européen des brevets

(11) Veröffentlichungsnummer: **0 363 855 B1**

(12) # EUROPÄISCHE PATENTSCHRIFT

(45) Veröffentlichungstag der Patentschrift: **15.12.93**

(51) Int. Cl.$^5$: **B01F 17/00**, C11D 1/65, B01D 19/04

(21) Anmeldenummer: **89118662.9**

(22) Anmeldetag: **07.10.89**

(54) **Konzentrierte und flüssige wasserhaltige Tensidzusammensetzung und deren Verwendung.**

(30) Priorität: **11.10.88 DE 3834481**
**11.03.89 DE 3908008**

(43) Veröffentlichungstag der Anmeldung:
**18.04.90 Patentblatt 90/16**

(45) Bekanntmachung des Hinweises auf die Patenterteilung:
**15.12.93 Patentblatt 93/50**

(84) Benannte Vertragsstaaten:
**AT BE CH DE ES FR GB IT LI NL SE**

(56) Entgegenhaltungen:
**EP-A- 0 234 716**
**WO-A-87/06855**
**FR-A- 2 345 142**
**GB-A- 602 109**
**GB-A- 2 054 635**
**US-A- 3 711 414**
**US-A- 4 235 759**
**EP-A- 0 268 873**
**DE-A- 2 416 745**
**FR-A- 2 368 570**
**GB-A- 736 351**
**GB-A- 2 195 653**
**US-A- 3 801 475**
**US-A- 4 751 009**

(73) Patentinhaber: **HOECHST AKTIENGESELLSCHAFT**

**D-65926 Frankfurt(DE)**

(72) Erfinder: **Klinger, Wolfgang**
**Hüttenberger Weg 7**
**D-8262 Altötting(DE)**
Erfinder: **Gohlke, Fritz Joachim, Dr.**
**Hochstaufenstrasse 9**
**D-8269 Burgkirchen(DE)**

**EP 0 363 855 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft konzentrierte und flüssige wasserhaltige Tensidzusammensetzungen mit einem Anion-Tensid und einem Kation-Tensid. Die Erfindung betrifft ferner die Verwendung dieser Tensidzusammensetzungen.

Es ist schon seit langem bekannt, Anion-Tenside und Kation-Tenside im Molverhältnis von etwa 1 : 1 in Gegenwart von Wasser zusammenzubringen. Diese Zusammensetzungen mit einem Anion-Tensid und einem Kation-Tensid (Anion-Kation-Tensidkomplexe) werden als wäßrige Suspension oder Emulsion und im Falle höherer Konzentration als gelartige Masse beschrieben. So ist aus der US-A-3 684 736 eine Tensidzusammensetzung bekannt, die im wesentlichen aus einem Ethersulfat als Anion-Tensid und Dodecylbenzyltrimethylammoniumchlorid als Kation-Tensid im Verhältnis von 1 : 1 und aus mehr als 99 Gew.-% Wasser besteht. In der Patentschrift wird mehrfach hervorgehoben, daß nur bei dieser niedrigen Konzentration an Tensid eine handhabbare Suspension erhalten wird und schon geringfügig höher konzentrierte Zusammensetzungen nicht mehr flüssig, sondern als gelatinartige Masse vorliegen. In der genannten US-Patentschrift wird ferner gezeigt, daß die in Rede stehenden Tensidzusammensetzungen eine niedrigere Oberflächenspannung und einen kleineren Schaumwert liefern, als das Anion-Tensid oder Kation-Tensid allein.

Nachdem also Zusammensetzungen, die ein anionisches Tensid und ein kationisches Tensid enthalten, sehr vorteilhafte Tensideigenschaften besitzen, wäre es äußerst wünschenswert, solche Zusammensetzungen zur Verfügung zu haben, die auch bei relativ hoher Tensidkonzentration flüssig und damit gut handhabbar sind.
Derartige Tensidzusammensetzungen werden in der neueren GB-A-2 195 653 beschrieben. Es handelt sich um wäßrige Emulsionen, bestehend im wesentlichen aus 10 Teilen von einem Anion-Tensid und einem Kation-Tensid im Molverhältnis von etwa 1 : 1, 0,5 bis 10 Teilen von einem Emulgator und 15 bis 100 Teilen Wasser. Die Herstellung der Emulsion erfolgt, kurz zusammengefaßt, durch Zusammenmischen des kationischen und anionischen Tensids im genannten Molverhältnis, Erwärmen der Mischung, bis sie schmilzt, Vermischen der abgekühlten, erstarrten Schmelze mit dem Emulgator, Erwärmen dieser Mischung, bis sie flüssig ist, und Zugeben von Wasser, bis die angestrebte Öl-in-Wasser-Emulsion vorliegt.
Die in der GB-A-2 195 653 beschriebenen flüssigen Tensidformulierungen enthalten zwar, zumindest teilweise, eine beträchtlich höhere Menge an Tensid als jene der genannten US-Patentschrift, sie weisen aber, genauso wie diese, einen hohen emulsionsartigen oder suspensionsartigen Charakter auf, sie stellen also keine klare flüssige Zusammensetzung dar. Im Falle der Emulsionen gemäß der genannten britischen Patentanmeldung ist ferner von Nachteil, daß ihre Herstellung aufwendig und kompliziert ist.

Die Aufgabe der Erfindung besteht demnach darin, eine Zusammensetzung aus Wasser und Anion-Tensiden und Kation-Tensiden zu schaffen, die eine hohe Tensidkonzentration besitzt und gleichzeitig eine im wesentlichen klare Lösung darstellt. Die neuen Tensidzusammensetzungen sollen ferner in einfacher Weise herzustellen sein und vorteilhafte Eigenschaften aufweisen.

Die erfindungsgemäße konzentrierte und flüssige wasserhaltige Tensidzusammensetzung mit einem Anion-Tensid und einem Kation-Tensid ist dadurch gekennzeichnet, daß sie erhältlich ist, indem man mindestens ein Anion-Tensid und mindestens ein Kation-Tensid im Molverhältnis von 1 : (0,3 bis 10) mit Wasser in einer Menge von 50 bis 80 Gew.-%, bezogen auf die Gewichtssumme aus Anion-Tensid, Kation-Tensid und Wasser, bei einer Temperatur von 25 bis 95 °C unter Ausbildung zweier Phasen mischt, die Trennung der beiden Phasen abwartet und die obere angestrebte konzentrierte Tensidphase von der unteren Salzphase abtrennt, wobei als Kation-Tensid ein quartäres Ammoniumsalz der Formel $N^+(R^1,R^2,R^3,R^4)X^-$ (1) eingesetzt wird, worin bedeuten $R^1$ und $R^2$ einen Alkylrest mit 1 bis 4 C-Atomen oder einen Oxalkylenrest mit 1 bis 10 Ethylenoxid-Einheiten, Propylenoxid-Einheiten oder Ethylenoxid-Einheiten und Propylenoxid-Einheiten, $R^3$ einen Alkylrest oder einen Alkenylrest mit 6 bis 22 C-Atomen, $R^4$ einen Alkylrest oder einen Alkenylrest mit 6 bis 22 C-Atomen oder den Benzylrest und $X^-$ ein Anion einer anorganischen oder organischen Säure.

Die erfindungsgemäßen konzentrierten und flüssigen wasserhaltigen Tensidzusammensetzungen mit einem Anion-Tensid und einem Kation-Tensid bestehen im wesentlichen aus a) 15 bis 70 Gew.-% Wasser und b) 30 bis 85 Gew.-% von mindestens einem Anion-Tensid und mindestens einem Kation-Tensid der angegebenen Art im Molverhältnis von 1 : (0,3 bis 10).

Die erfindungsgemäßen Tensidzusammensetzungen sind im wesentlichen klare Flüssigkeiten mit einem hohen Gehalt an anionischen und kationischen Tensiden. Die Erfindung beruht auf der überraschenden Feststellung, daß Anion-Tenside und bestimmte Kation-Tenside und Wasser dann klare Lösungen bilden, wenn die beiden Tenside in einem bestimmten Molverhältnis anwesend sind und das Wasser im wesentlichen in einer solchen Menge vorliegt, die von den beiden Tensiden gebunden (eingelagert) werden kann;

Mischungen mit einer geringeren Wassermenge und auch solche mit einer größeren Wassermenge sind mehr oder weniger trüb bis gelartig. Dies ist ein ganz unerwartetes Ergebnis, da bisher doch die Meinung herrschte, daß aus Anion-Tensiden plus Kation-Tensiden aus Unlöslichkeitsgründen keine klaren wäßrigen Formulierungen herstellbar seien und schon gar nicht solche, mit einem höheren Tensidgehalt; diese würden vielmehr als gelartige oder wachsartige Masse vorliegen und seien nur unter Verwendung von Hilfsmitteln, wie Emulgatoren und dergleichen, in flüssiger Form zu erhalten. Mit der vorliegenden Erfindung ist dieses starke Vorurteil überwunden worden.

Die gemäß Erfindung einzusetzenden anionischen und kationischen Tenside sind bekannt und im Handel erhältlich. Die erfindungsgemäßen Zusammensetzungen enthalten mindestens ein Anion-Tensid und mindestens ein Kation-Tensid, sie können also auch mehrere Anion- und Kation-Tenside vom jeweils gleichen Typ oder von verschiedenen Typen enthalten.

Als Anion-Tensid (das im Vergleich zum Kation-Tensid weniger kritisch ist) sind im Prinzip alle oberflächenaktiven anionischen Verbindungen geeignet, vorzugsweise solche vom Sulfonat-, Sulfat- oder Carboxylat-Typ, wobei jene vom Sulfonat- und Sulfat-Typ bevorzugst sind. Diese anionischen Tenside enthalten bekanntlich einen mehr oder weniger hydrophoben anionischen Teil mit relativ hohem Molekulargewicht. Dieser besteht im allgemeinen aus einem Alkyl- oder Alkenylrest mit mindestens 6 Kohlenstoffatomen. Das Kation ist im allgemeinen ein Alkalimetall, Ammonium oder ein Alkanolamin, wobei Alkalimetall und Ammonium bevorzugt sind. Bevorzugte Vertreter vom Sulfonat-Typ sind die Alkansulfonate, die $\alpha$-Olefinsulfonate und die Alkylarylsulfonate mit 6 bis 22 C-Atomen, vorzugsweise 8 bis 18 C-Atomen, in der Alkangruppe, $\alpha$-Olefingruppe und der Alkylgruppe des Alkylarylrestes (bei den $\alpha$-Olefinsulfonaten handelt es sich bekanntlich in der Regel um eine Mischung aus Alken- und Hydroxyalkansulfonaten). Weitere bevorzugte Vertreter vom Sulfonat-Typ sind die N-Acyl-N-methyl-1-aminoethan-2-sulfonate mit 6 bis 22 C-Atomen, vorzugsweise 8 bis 18 C-Atomen, in der Acylgruppe (das sind Derivate von N-Methyl-taurin, die beispielsweise durch Umsetzung von Fettsäurechloriden mit dem Alkalimetallsalz des N-Methyl-taurins entstehen), ferner die Sulfobernsteinsäuremonoalkylester mit 6 bis 22 C-Atomen im Alkylrest, vorzugsweise 8 bis 18 C-Atomen, Sulfobernsteinsäuredialkylester mit 6 bis 22 C-Atomen, vorzugsweise 8 bis 18 C-Atomen, in jedem der beiden Alkylreste und die Fettsäuremethylester-$\alpha$-sulfonate mit 6 bis 22 C-Atomen, vorzugsweise 8 bis 18 C-Atomen, in der Fettsäurekomponente. Bevorzugte Vertreter vom Sulfat-Typ sind die Fettalkoholsulfate und die ethoxylierten Fettalkohol- und Alkylphenolsulfate mit 6 bis 22 C-Atomen, vorzugsweise 8 bis 18 C-Atomen, in der Fettalkoholkomponente und mit 1 bis 10 C-Atomen, vorzugsweise 1 bis 5 C-Atomen, in der Alkylgruppe der Alkylphenole. Die ethoxylierten Vertreter enthalten im allgemeinen 1 bis 20 mol Ethylenoxid je Mol, vorzugsweise 1 bis 10 mol Ethylenoxid. Von den genannten anionischen Tensiden werden vorzugsweise die Alkansulfonate, $\alpha$-Olefinsulfonate, Alkylbenzolsulfonate, Acylaminoalkansulfonate, Sulfobernsteinsäureester, Fettalkoholsulfate und die ethoxylierten Fettalkoholsulfate eingesetzt, wobei die Alkansulfonate und Olefinsulfonate besonders bevorzugt sind (es versteht sich von selbst, daß die genannten hydrophoben Gruppen mit 6 bis 22 C-Atomen, vorzugsweise 8 bis 18 C-Atomen, auch Doppelbindungen enthalten können, in der Regel 1 bis 3). Nachstehend seien noch geeignete anionische Tenside im einzelnen genannt: Natrium-$C_{11}$ bis $C_{17}$-alkansulfonat (primäres oder sekundäres Alkansulfonat), Natrium-$C_8$ bis $C_{18}$-$\alpha$-olefinsulfonat, Natriumdodecylbenzolsulfonat, das Natriumsalz von N-Oleyl-N-methyl-taurin, Natriumdioctyl-sulfosuccinat, das Natriumsalz von $\alpha$-Sulfo-$C_{14}$ bis $C_{18}$-fettsäuremethylester, Natriumlaurylsulfat, Natriumpalmitylsulfat, Natriumcocosalkylsulfat, Natriummonoethoxydodecanolsulfat, Natrium-$C_{12}$ bis $C_{14}$-alkylsulfat, ethoxyliert mit 3 mol Ethylenoxid, Natriumtalgalkylsulfat, ethoxyliert mit 10 mol Ethylenoxid, und Natriumtributylphenolsulfat, ethoxyliert mit 7 mol Ethylenoxid.

Als Kation-Tensid werden erfindungsgemäß bestimmte quartäre Ammoniumsalze eingesetzt (so sind zum Beispiel jene quartären Ammoniumsalze ungeeignet, die am Stickstoffatom drei oder mehr kurze aliphatische Reste aufweisen, wie Lauryltrimethyl-, Talgalkyltrimethyl-und Dodecylbenzyl-trimethylammoniumchlorid (vergleiche die eingangs genannte US-A-3 684 736). Die erfindungsgemäß einzusetzenden quartären Ammoniumsalze entsprechen der nachstehenden Formel 1

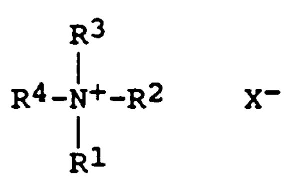

worin bedeuten:

$R^1$ und $R^2$ (die gleich oder verschieden sein können) einen Alkylrest mit 1 bis 4 C-Atomen oder einen

Oxalkylenrest mit 1 bis 10, vorzugsweise 1 bis Ethylenoxid-Einheiten, Propylenoxid-Einheiten oder Ethylenoxid-Einheiten und Propylenoxid-Einheiten, $R^3$ einen Alkylrest oder einen Alkenylrest mit 6 bis 22 C-Atomen, $R^4$ einen Alkylrest oder einen Alkenylrest mit 6 bis 22 C-Atomen oder den Benzylrest und $X^-$ ein Anion einer anorganischen oder organischen Säure (die Alkenylreste können auch mehrere Doppelbindungen enthalten, im allgemeinen enthalten sie 1 bis 3 Doppelbindungen).
Es hat sich herausgestellt, daß es im Falle von quartären Ammoniumsalzen, die am Stickstoffatom 2 Alkylreste mit jeweils 15 und mehr C-Atomen besitzen, vorteilhaft ist, daß eine der beiden langen, gesättigten Gruppen ein Benzylrest ist oder daß die beiden langen Gruppen, zusammengenommen, mindestens 5 Gew.-% ungesättigte Anteile enthalten, vorzugsweise 8 bis 50 Gew.-%, Gewichtsprozente bezogen auf das Gewicht des eingesetzten Ammoniumsalzes. So ist es zum Beispiel vorteilhafter, anstelle von Distearyldimethylammoniumchlorid Stearyl-benzyl-dimethylammoniumchlorid einzusetzen oder Dicocosalkyl- oder Ditalgalkyldimethylammoniumchlorid. Weitere bevorzugte und besonders geeignete quartäre Ammoniumsalze sind solche der Formel 1, wenn $R^1$, $R^2$ und $X^-$ die angegebenen Bedeutungen haben, $R^3$ ein Alkylrest ist mit 8 bis 14 C-Atomen, vorzugsweise 8 bis 10 C-Atomen, und $R^4$ eine der Bedeutungen von $R^3$ hat oder der Benzylrest ist. Bei den für $R^1$ und $R^2$ genannten $C_1$ bis $C_4$-Alkylresten handelt es sich vorzugsweise um Methyl oder Ethyl.
Das Anion im kationischen Tensid ist, ebenso wie das Kation im anionischen Tensid, im allgemeinen nicht kritisch. Als Anion im kationischen Tensid sind also die verschiedenen anorganischen und organischen negativ geladenen Reste möglich. Geeignete Vertreter sind anorganische Säurereste, wie Halogenid, vorzugsweise Chlorid oder Bromid, Borat, Phosphat und Sulfat, organische Säurereste von ein- oder mehrwertigen, gesättigten oder ungesättigten, aliphatischen oder aromatischen Säuren, wie Formiat, Acetat, Propionat, Laurat, Stearat, Oleat, Lactat, Citrat, Sorbat, Benzoat, Salicylat und $C_1$ bis $C_3$-Alkosulfatanionen, vorzugsweise das Methosulfatanion.

Nachstehend seien noch geeignete kationische Tenside im einzelnen genannt: Dioctyldimethylammoniumchlorid, Octyldecyldimethyl-, Didecyldimethyl-, Dilauryldimethyl-, Dioleyldimethyl-, Dicocosalkyldimethyl- und Ditalgalkyldimethylammoniumchlorid, Myristyldimethylbenzyl- und Stearyldimethylbenzylammoniumchlorid, Didecyl-methyl-oxethylammoniumpropionat, Dioctyl-polyoxethylammoniumpropionat, Ditalgalkylmethyl-oxpropylammoniumchlorid.

Das Wasser der erfindungsgemäßen Zusammensetzungen ist vorzugsweise entmineralisiertes Wasser.

In der erfindungsgemäßen Tensidzusammensetzung beträgt das Molverhältnis von Anion-Tensid zu Kation-Tensid 1 : (0,3 bis 10), vorzugsweise 1 : (0,5 bis 5), insbesondere 1 : (0,7 bis 2). Die Menge an Wasser und die Menge an Anion-Tensid plus Kation-Tensid (das ist die Tensidkonzentration) liegen bei 15 bis 70 Gew.-% (Wasser) und 30 bis 85 Gew.-% (Tensidkonzentration), vorzugsweise bei 20 bis 60 Gew.-% und 40 bis 80 Gew.%, insbesondere bei 20 bis 50 Gew.-% und 50 bis 80 Gew.-%, (Gewichtsprozente bezogen auf das Gewicht der Zusammensetzung). Bevorzugte erfindungsgemäße Tensidzusammensetzungen bestehen demnach im wesentlichen aus a) 20 bis 60 Gew.-% Wasser und b) 40 bis 80 Gew.-% von mindestens einem Anion-Tensid und mindestens einem Kation-Tensid der angegebenen Art im Molverhältnis von 1 : (0,5 bis 5) oder aus a) 20 bis 50 Gew.-% Wasser und b) 50 bis 80 Gew.-% von mindestens einem Anion-Tensid und mindestens einem Kation-Tensid der angegebenen Art im Molverhältnis von 1 : (0,7 bis 2). Die erfindungsgemäßen Tensidzusammensetzungen enthalten neben den Komponenten Wasser und Tensid gegebenenfalls auch etwas Salz, und zwar jenes, das aus dem Kation des anionischen Tensids und dem Anion des kationischen Tensids gebildet ist.

Die erfindungsgemäßen Tensidzusammensetzungen sind das Ergebnis einer speziellen Arbeitsweise beim Zusammenbringen der Komponenten Wasser und Tensid. Diese besteht darin, daß man mindestens ein Anion-Tensid und mindestens ein Kation-Tensid der genannten Art im Molverhältnis von 1 : (0,3 bis 10), vorzugsweise 1 : (0,5 bis 5), insbesondere 1 : (0,7 bis 2), mit Wasser in einer Menge von 50 bis 80 Gew.-%, vorzugsweise 60 bis 80 Gew.-%, Gewichtsprozente bezogen auf die Gewichtssumme aus Anion-Tensid, Kation-Tensid und Wasser, bei einer Temperatur von 25 bis 95 °C, vorzugsweise 40 bis 85 °C, unter Ausbildung zweier Phasen mischt, die Trennung der beiden Phasen abwartet und die obere angestrebte konzentrierte Tensidphase von der unteren Salzphase abtrennt.

Die einzusetzenden Anion-Tenside und Kation-Tenside liegen bekanntlich oft als Feststoffe oder als gelartige Tensid-Wasser-Mischung vor. Anion-Tensid, Kation-Tensid und Wasser werden in der angegebenen Menge in einem Reaktionsgefäß bei einer Temperatur von 25 bis 95 °C, vorzugsweise 40 bis 85 °C, vermischt, vorzugsweise unter Rühren, wobei es zur Bildung von zwei Phasen kommt. In welcher Reihenfolge die drei Komponenten in das Reaktionsgefäß eingebracht werden, ist nicht kritisch. Entscheidend ist, daß die drei Komponenten bei der angegebenen Temperatur gut gemischt werden. Die Zeit des Mischens liegt in der Regel bei 5 bis 50 Minuten. Mit weniger als 5 Minuten ist im allgemeinen auch mit starkem Rührem keine intensive Vermischung der Komponenten gegeben und mehr als 50 Minuten bringen

im allgemeinen keine weitere Verstärkung der Vermischung. Aus diesen Gründen liegt die Mischzeit zweckmäßigerweise bei 10 bis 40 Minuten. Nach Abschluß der Vermischung der Komponenten bei der angegebenen Mischtemperatur wird das Reaktionsgefäß stehengelassen, bis sich der Inhalt in eine obere und eine untere Phase getrennt hat. Während dieser Standzeit, die etwa 30 Minuten bis mehrere Stunden betragen kann, kühlt sich der Inhalt in der Regel auf Raumtemperatur ab. Von den beiden in scharfer Trennung vorliegenden Phasen stellt die obere Phase (Tensidphase) die angestrebte konzentrierte und flüssige und gleichzeitig klare, wasserhaltige Tensidzusammensetzung dar, während die untere Phase (Salzphase) im wesentlichen das aus dem Anion des kationischen Tensids und dem Kation des anionischen Tensid gebildete Salz gelöst in Wasser enthält. Die angestrebte Tensidphase kann beispielsweise einfach durch Abgießen gewonnen werden.

Mit dem Verfahren werden klare flüssige und damit gut handhabbare Anion- und Kation-Tensidzusammensetzungen erhalten, die vorteilhafte Eigenschaften aufweisen und direkt, das heißt ohne weitere Operationen, wie Reinigung, Aufkonzentrierung und dergleichen, einsetzbar sind. So zeichnen sich die erfindungsgemäßen Tensidzusammensetzungen unter anderem durch die folgenden besonders gewünschten Merkmale und Eigenschaften aus: Es sind flüssige und klare konzentrierte Tensidformulierungen mit einem niedrigen Stockpunkt (gutes Kälteverhalten), geringer Schaumbildung, niedriger Oberflächenspannung und mit Trübungspunktbildung. Je nach Wahl der Verfahrensmerkmale, Molverhältnis und Wassermenge, und der Art des Anion-Tensids und Kation-Tensids, lassen sich bei einer oder mehreren gewünschten Eigenschaften besonders gute Werte erzielen. Das erfindungsgemäße Verfahren hat also den weiteren großen Vorteil, daß gleichsam maßgeschneiderte Anion-Kation-Tensidzusammensetzungen hergestellt werden können. So besitzen insbesondere solche erfindungsgemäßen Tensidzusammensetzungen einen niedrigen Stockpunkt und einen ausgeprägten Trübungspunkt, in denen das Anion-Tensid und das Kation-Tensid im wesentlichen im stöchiometrischen Verhältnis vorliegen. Bei diesen Zusammensetzungen ist ferner eine besonders hohe Tensidkonzentration erreichbar (der Wassergehalt läuft also durch ein Minimum, was anzeigt, daß hier die geringste Menge an Phasenwasser vorliegt). Geringe Schaumneigung zeigen insbesondere solche erfindungsgemäßen Tensidzusammensetzungen, in denen das Kation-Tensid im Vergleich zum Anion-Tensid im Überschuß vorliegt, während bei einem Überschuß an Anion-Tensid insbesondere hohe Benetzungswerte erhalten werden. Bezüglich Oberflächenspannungswerte kann das Molverhältnis von Anion-Tensid zu Kation-Tensid in einem relativ weiten Bereich variieren. Sehr klare Tensidzusammensetzungen werden schließlich insbesondere dann erhalten, wenn der hydrophobe Teil im Kation-Tensid ein $C_8$ bis $C_{14}$-Alkylrest ist, vorzugsweise ein $C_8$ bis $C_{10}$-Alkylrest.

Die beschriebenen Tensidzusammensetzungen werden erfindungsgemäß vorzugsweise als Schaumunterdrückungsmittel verwendet.

Die Verwendung zur Unterdrückung oder Verringerung von Schaum erfolgt vorzugsweise dadurch, daß das Produkt, dessen Schaumbildung unterdrückt oder verringert werden soll, mit der Tensidzusammensetzung in Kontakt gebracht wird (in der Regel bei Raumtemperatur). Erfindungsgemäß wird also die Tensidzusammensetzung dem zu behandelnden Produkt zugegeben oder in das Produkt eingemischt (inkorporiert). Die Menge an Tensidzusammensetzung kann in weiten Grenzen variieren. Die angestrebte Antischaumbehandlung wird im allgemeinen dann erreicht, wenn die erfindungsgemäße Tensidzusammensetzung dem zu behandelnden Produkt im Gewichtsverhältnis von. 1 : (1 bis 10), vorzugsweise 1 : (1 bis 5), zugegeben wird, wobei sich das Gewichtsverhältnis auf die Menge an Anion- plus Kation-Tensid in der Tensidzusammensetzung und auf die Menge an schäumender Substanz im zu behandelnden Produkt bezieht. Es wird also zunächst die Menge derjenigen Verbindungen im schäumenden Produkt festgestellt, die im wesentlichen den Schaum verursachen. In das Produkt wird dann die erfindungsgemäße Tensidzusammensetzung in einer solchen Menge eingebracht, daß das angegebene Gewichtsverhältnis vorliegt. Von den erfindungsgemäßen Tensidzusammensetzungen werden vorzugsweise jene eingesetzt, die das Anion-Tensid und das Kation-Tensid im Molverhältnis von 1 : (0,7 bis 2) enthalten und eine Anion- plus Kation-Tensidkonzentration von etwa 50 bis 80 Gew.-% aufweisen. Mit der erfindungsgemäßen Verwendung der neuen Tensidzusammensetzungen wird die angestrebte Schaumunterdrückung oder Schaumverringerung in einem unerwartet hohen Ausmaß erreicht.

Die Erfindung wird nun an Beispielen noch näher erläutert.

Beispiel 1

In diesem Beispiel wurden als Anion-Tensid Natrium-$C_{13}$ bis $C_{17}$-alkansulfonat und als Kation-Tensid Didecyldimethylammoniumchlorid, jeweils in Form einer wäßrigen gelartigen Masse mit einem Sulfonatgehalt von 60 Gew.-% beziehungsweise einem quartären Ammoniumchloridgehalt von 50 Gew.-%, eingesetzt. 440 g vollentsalztes Wasser wurden in einem Becherglas auf 60 °C erhitzt. In das erhitzte Wasser wurden

unter Rühren 240 g (1 mol) Anion-Tensid, gelöst in Wasser, und anschließend 320 g (1 mol) Kation-Tensid eingebracht. Die Mischung, die aus 70 Gew.-% Wasser und 30 Gew.-% Anion-Tensid und Kation-Tensid im Molverhältnis von 1 : 1 bestand, wurde bei 60 °C 30 Minuten lang gut gerührt. Nach dieser Zeit wurden das Rühren und das Erhitzen abgebrochen und der Inhalt des Becherglases (in dem die Bildung von zwei Phasen zu sehen war) 10 Stunden lang bei Raumtemperatur stehengelassen. Nach dieser Zeit hatten sich zwei scharf voneinander getrennte Phasen gebildet. Die obere klare Phase, das ist die angestrebte Tensid-Phase oder Tensidzusammensetzung, wurde durch Abgießen von der unteren Phase, das ist die wäßrige Salz-Phase (NaCl), gewonnen.
Die erhaltene flüssige und klare Tensidzusammensetzung bestand aus 28 Gew.-% Wasser und 72 Gew.-% Anion- plus Kation-Tensid im Molverhältnis von 1 : 1 (der Gehalt an Salz in der Tensidzusammensetzung lag unter 0,1 Gew.-%).
Erfolgt das obengenannte Stehenlassen (Standzeit) des Inhaltes des Becherglases nach dem Abbrechen des Rührens unter Aufrechterhaltung der Temperatur von 60 °C, so ist die Bildung der beiden scharf voneinander getrennten Phasen schon nach einer Stunde beendet; durch Stehenlassen der Mischung in der Wärme wird also die Trennung in die beiden Phasen beträchtlich beschleunigt.

Beispiele 2 bis 17

In den erfindungsgemäßen Beispielen 2 bis 17 wurden die nachstehend angegebenen Anion-Tenside und Kation-Tenside eingesetzt (die im Handel erhältlichen Tenside stellen oft, wie oben bereits beschrieben, eine wäßrige gelartige Masse dar, wobei der Gehalt an Anion-Tensid und Kation-Tensid bei etwa 50 bis 90 Gew.-% liegt; eine Ausnahme bilden zum Beispiel die Tauride, die im allgemeinen als Pulver vorliegen).

Anion-Tenside:

A1: Natrium-$C_{13}$ bis $C_{17}$-alkansulfonat
A2: Natrium-$C_{14}$ bis $C_{16}$-$\alpha$-olefinsulfonat
A3: Natrium-dodecylbenzolsulfonat
A4: Natrium-N-oleoyl-N-methyl-taurid
A5: Natrium-diisodecylsulfosuccinat
A6: Natrium-laurylsulfat
A7: Natrium-$C_{12}$ bis $C_{14}$-alkylsulfat, ethoxyliert mit 3 mol Ethylenoxid
A8: Natrium-tributylphenolsulfat, ethoxyliert mit 7 mol Ethylenoxid.

Kation-Tenside:

K1: Dioctyldimethylammoniumchlorid
K2: Didecyldimethylammoniumchlorid
K3: Myristyldimethylbenzylammoniumchlorid
K4: Stearyldimethylbenzylammoniumchlorid
K5: Cocosalkyldimethylbenzylammoniumchlorid
K6: Ditalgalkyldimethylammoniumchlorid
K7: Didecyl-oxethyl-methylammoniumpropionat (erhalten durch Umsetzung von Didecylmethylamin mit 4 mol Ethylenoxid und 1 mol Propionsäure pro mol tertiärem Amin)
K8: Ditalgalkyl-hydroxypropyl-methylammoniumchlorid (erhalten durch Umsetzung von Ditalgalkyl-hydroxypropyl-amin mit 1 mol Methylchlorid pro mol tertiärem Amin).

Die Herstellung der erfindungsgemäßen Tensidzusammensetzungen der Beispiele 2 bis 17 erfolgte analog Beispiel 1. In der nachstehenden Tabelle 1 sind die in den Beispielen verwendeten Anion- und Kation-Tenside, das Molverhältnis von Anion- zu Kation-Tensid, die eingesetzten Mengen an Wasser und an Anion- und Kation-Tensid in Gewichtsprozent (die Summe der beiden Gewichtsprozente ergibt 100 Gew.-%), die Temperatur, bei der die Mischung aus Wasser und Anion- plus Kation-Tensid unter Rühren gehalten worden ist, und die Rührzeit zusammengefaßt. Der Vollständigkeit halber enthält die Tabelle auch das Beispiel 1. Im Beispiel 17 wurde als Kation-Tensid eine Mischung aus 0,7 mol Didecyldimethylammoniumchlorid und 0,3 mol Cocosalkyldimethylbenzylammoniumchlorid eingesetzt.

In der nachstehenden Tabelle 2 sind die Bestandteile der erhaltenen, jeweils flüssigen und im wesentlichen klaren Tensidzusammensetzungen der Beispiele 1 bis 17 angegeben, nämlich die Menge (Gewichtsprozente) an Wasser und an Anion-Tensid und Kation-Tensid und deren Molverhältnis (die in den

Tensidzusammensetzungen gegebenenfalls vorhandene Salzmenge ist sehr gering und damit unwesentlich); die Tabelle enthält ferner besondere Eigenschaften der erfindungsgemäßen Tensidzusammensetzungen, und zwar den Stockpunkt, den Schaumwert und die Oberflächenspannung.

Der Stockpunkt (pour point) wurde nach DIN-ISO 3016 bestimmt. Es wurden 50 bis 80 g Tensidzusammensetzung in ein Becherglas gegeben und so weit abgekühlt, bis die bei Raumtemperatur flüssige und gut gießbare Zusammensetzung nicht mehr gießbar war. Die dabei vorliegende Temperatur wird als Stockpunkt der Zusammensetzung bezeichnet.
Der Schaumwert wurde nach DIN 53 902 bestimmt. Es wurde ein Gramm von der Tensidzusammensetzung in einem Liter vollentsalztem Wasser gelöst. Von dieser Lösung wurden etwa 200 ml in den 1000-ml-Meßzylinder gegeben und mit der gelochten Schlagscheibe dreißigmal geschlagen. Die entstandene Schaumhöhe im Meßzylinder, ausgedrückt in Milliliter, stellt den Schaumwert dar.
Die Oberflächenspannung wurde nach DIN 53 914 bestimmt. Es wurden 0,1 g von der Tensidzusammensetzung in einem Liter vollentsalztem Wasser gelöst. Von dieser Lösung wurde die Oberflächenspannung mit einem üblichen Tensiometer nach der Ringabreißmethode in mN/m gemessen.

Wie aus den Beispielen 1 bis 17 hervorgeht, sind die erfindungsgemäßen Tensidzusammensetzungen in einfacher Weise herstellbar. Sie besitzen eine hohe Konzentration an Tensid. Sie sind klar und flüssig und damit gut handhabbar, und sie weisen hervorragende Werte in wichtigen Tensideigenschaften auf.

TABELLE 1 Herstellung von erfindungsgemäßen Tensidzusammensetzungen

| Beispiele | Anion-Tensid | | Kation-Tensid | | eingesetzte Menge an Wasser und Anion- plus Kation-Tensid in Gew.-% | | Temperatur | Rührzeit |
|---|---|---|---|---|---|---|---|---|
| | Typ | Mol | Typ | Mol | Wasser | Tensid | °C | Minuten |
| 1 | A1 | 1 | K2 | 1 | 70 | 30 | 60 | 30 |
| 2 | A1 | 1 | K1 | 10 | 70 | 30 | 50 | 20 |
| 3 | A2 | 1 | K2 | 1 | 80 | 20 | 70 | 30 |
| 4 | A3 | 1 | K1 | 1,3 | 70 | 30 | 60 | 20 |
| 5 | A4 | 1 | K1 | 3 | 70 | 30 | 60 | 20 |
| 6 | A1 | 1 | K3 | 1 | 70 | 30 | 50 | 20 |
| 7 | A1 | 1 | K1 | 1,5 | 70 | 30 | 30 | 20 |
| 8 | A1 | 1 | K2 | 1 | 50 | 50 | 60 | 30 |
| 9 | A5 | 1 | K1 | 1 | 70 | 30 | 60 | 20 |
| 10 | A6 | 1 | K1 | 1 | 60 | 40 | 70 | 20 |
| 11 | A1 | 1 | K4 | 0,8 | 70 | 30 | 50 | 20 |
| 12 | A1 | 1 | K6 | 0,9 | 70 | 30 | 80 | 30 |
| 13 | A1 | 1 | K7 | 0,5 | 70 | 30 | 70 | 30 |
| 14 | A1 | 1 | K8 | 0,8 | 70 | 30 | 80 | 30 |
| 15 | A7 | 1 | K1 | 1 | 70 | 30 | 60 | 20 |
| 16 | A8 | 1 | K1 | 1 | 60 | 40 | 60 | 20 |
| 17 | A1 | 1 | K2<br>K5 | 0,7<br>0,3 | 70 | 30 | 60 | 20 |

**TABELLE 2** Bestandteile der erfindungsgemäßen Tensidzusammensetzungen und ihre Eigenschaften

| Beispiele | Wasser Gew.-% | Anion-Tensid und Kation-Tensid Gew.-% | Anion-Tensid und Kation-Tensid Molverhältnis | Stockpunkt °C | Schaumwert ml | Oberflächenspannung mN/m |
|---|---|---|---|---|---|---|
| 1 | 28 | 72 | 1 : 1 | -20 | 10 | 25 |
| 2 | 70 | 30 | 1 : 10 | - 5 | 10 | 27 |
| 3 | 27 | 73 | 1 : 1 | -11 | 10 | 25 |
| 4 | 20 | 80 | 1 : 1,3 | -20 | 30 | 28 |
| 5 | 40 | 60 | 1 : 3 | -25 | 10 | 30 |
| 6 | 51 | 49 | 1 : 1 | - 7 | 30 | 26 |
| 7 | 36 | 64 | 1 : 1,5 | -15 | 0 | 26 |
| 8 | 35 | 65 | 1 : 1 | -25 | 10 | 25 |
| 9 | 21 | 79 | 1 : 1 | -25 | 20 | 27 |
| 10 | 33 | 67 | 1 : 1 | -20 | 20 | 27 |
| 11 | 38 | 62 | 1 : 0,8 | + 3 | 100 | 28 |
| 12 | 26 | 74 | 1 : 0,9 | - 5 | 10 | 26 |
| 13 | 55 | 45 | 1 : 0,5 | -11 | 100 | 27 |
| 14 | 20 | 80 | 1 : 0,8 | + 4 | 10 | 27 |
| 15 | 33 | 67 | 1 : 1 | -10 | 20 | 29 |
| 16 | 44 | 56 | 1 : 1 | - 4 | 40 | 29 |
| 17 | 33 | 67 | 1 : 1 | -18 | 30 | 26 |

Beispiel 18

Mit diesem Beispiel soll die erfindungsgemäße Verwendung der neuen Tensidzusammensetzungen zur Unterdrückung oder Verringerung der Schaumbildung eines stark schäumenden Produktes demonstriert

werden. Es wurde zunächst eine wäßrige Lösung bereitet, in einer Menge von einem Liter, die als schäumende Verbindung 0,05 g Natrium-$C_{13}$ bis $C_{17}$-alkansulfonat enthielt und der Schaumwert der Lösung nach DIN 53 902 - wie oben beschrieben - bestimmt: Er betrug 190 ml.

Zur Lösung wurden nun 10 ppm der Tensidzusammensetzung des Beispiels 7 dazugegeben, und zwar aus Zweckmäßigkeitsgründen in Form einer Lösung mit Isopropanol im Verhältnis 1 : 9. Es wurde also soviel erfindungsgemäße Tensidzusammensetzung verwendet, daß das Verhältnis der Gewichtsmenge an Tensidzusammensetzung zur Gewichtsmenge an Substanz, die den Schaum in dem zu behandelnden Produkt verursacht, den Wert 1 : 5 hatte. Der Schaumwert der so erhaltenen Lösung wurde ebenfalls nach DIN 53 902 bestimmt: Er betrug 50 ml.

Mit den erfindungsgemäßen Tensidzusammensetzungen wird also eine unerwartet große Reduzierung des Schaumwertes erreicht.

**Patentansprüche**

1. Konzentrierte und flüssige wasserhaltige Tensidzusammensetzung mit einem Anion-Tensid und einem Kation-Tensid, dadurch gekennzeichnet, daß sie erhältlich ist, indem man mindestens ein Anion-Tensid und mindestens ein Kation-Tensid im Molverhältnis von 1 : (0,3 bis 10) mit Wasser in einer Menge von 50 bis 80 Gew.-%, bezogen auf die Gewichtssumme aus Anion-Tensid, Kation-Tensid und Wasser, bei einer Temperatur von 25 bis 95 °c unter Ausbildung zweier Phasen mischt, die Trennung der beiden Phasen abwartet und die obere angestrebte konzentrierte Tensidphase von der unteren Salzphase abtrennt, wobei als Kation-Tensid ein quartäres Ammoniumsalz der Formel $N^+(R^1,R^2,R^3,R^4)X^-$ (1) eingesetzt wird, worin bedeuten $R^1$ und $R^2$ einen Alkylrest mit 1 bis 4 C-Atomen oder einen Oxalkylenrest mit 1 bis 10 Ethylenoxid-Einheiten, Propylenoxid-Einheiten oder Ethylenoxid-Einheiten und Propylenoxid-Einheiten, $R^3$ einen Alkylrest oder einen Alkenylrest mit 6 bis 22 C-Atomen, $R^4$ einen Alkylrest oder einen Alkenylrest mit 6 bis 22 C-Atomen oder den Benzylrest und $X^-$ ein Anion einer anorganischen oder organischen Säure.

2. Tensidzusammensetzung nach Anspruch 1, wobei als Kation-Tensid ein quartäres Ammoniumsalz der Formel (1) eingesetzt wird, worin $R^1$, $R^2$, $R^3$, $R^4$ und $X^-$ die angegebenen Bedeutungen haben, mit der Maßgabe, daß im Falle von $R^3$ = Alkyl mit 15 bis 22 C-Atomen, $R^4$ Benzyl ist oder $R^3$ und $R^4$ insgesamt mindestens 5 Gew.-% Alkenylreste enthalten, Gewichtsprozente bezogen auf das Ammoniumsalz.

3. Tensidzusammensetzung nach Anspruch 1 oder 2, wobei als Anion-Tensid ein solches vom Sulfonat-, Sulfat- oder Carboxylat-Typ eingesetzt wird.

4. Tensidzusammensetzung nach Anspruch 1, wobei als Anion-Tensid ein $C_6$ bis $C_{22}$-Alkansulfonat, $C_6$ bis $C_{22}$-$\alpha$-Olefinsulfonat, ($C_6$ bis $C_{22}$-Alkyl)-arylsulfonat, N-$C_6$ bis $C_{22}$-Acyl-N-methyl-1-aminoethan-2-sulfonat, ein Sulfobernsteinsäuremono- oder Sulfobernsteinsäuredi-$C_6$ bis $C_{22}$-alkylester, ein ($C_6$ bis $C_{22}$-Fettsäure)-methylester-$\alpha$-sulfonat, $C_6$ bis $C_{22}$-Fettalkoholsulfat, ein ethoxyliertes $C_6$ bis $C_{22}$-Fettalkoholsulfat mit 1 bis 20 Ethylenoxid-Einheiten oder ein ethoxyliertes ($C_1$ bis $C_{10}$-Alkyl)-phenolsulfat mit 1 bis 20 Ethylenoxid-Einheiten eingesetzt wird und als Kation-Tensid ein quartäres Ammoniumsalz der Formel (1), worin $R^1$, $R^2$ und $X^-$ die angegebenen Bedeutungen haben, $R^3$ ein Alkylrest mit 8 bis 14 C-Atomen und $R^4$ ein Alkylrest mit 8 bis 14 C-Atomen oder der Benzylrest ist.

5. Tensidzusammensetzung nach Anspruch 1, wobei als Anion-Tensid ein $C_6$ bis $C_{22}$-Alkansulfonat, $C_6$ bis $C_{22}$-$\alpha$-Olefinsulfonat, ($C_6$ bis $C_{22}$-Alkyl)-benzolsulfonat, N-$C_6$ bis $C_{22}$-Acyl-N-methyl-1-aminoethan-2-sulfonat, ein Sulfobernsteinsäuremono- oder Sulfobernsteinsäuredi-$C_6$ bis $C_{22}$-alkylester, ein $C_6$ bis $C_{22}$-Fettalkoholsulfat oder ein ethoxyliertes $C_6$ bis $C_{22}$-Fettalkoholsulfat mit 1 bis 20 Ethylenoxid-Einheiten eingesetzt wird und als Kation-Tensid ein quartäres Ammoniumsalz der Formel (1), worin $R^1$, $R^2$ und $X^-$ die angegebenen Bedeutungen haben, R3 ein Alkylrest mit 8 bis 14 C-Atomen und $R^4$ ein Alkylrest mit 8 bis 14 C-Atomen oder der Benzylrest ist.

6. Tensidzusammensetzung nach Anspruch 1, wobei als Anion-Tensid ein $C_6$ bis $C_{22}$-Alkansulfonat, $C_6$ bis $C_{22}$-$\alpha$-Olefinsulfonat, ($C_6$ bis $C_{22}$-Alkyl)benzolsulfonat, N-$C_6$ bis $C_{22}$-Acyl-N-methyl-1-aminoethan-2-sulfonat, ein Sulfobernsteinsäuremono- oder Sulfobernsteinsäuredi-$C_6$ bis $C_{22}$-alkylester, ein $C_6$ bis $C_{22}$-Fettalkoholsulfat oder ein ethoxyliertes $C_6$ bis $C_{22}$-Fettalkoholsulfat mit 1 bis 20 Ethylenoxid-Einheiten eingesetzt wird und als Kation-Tensid ein quartäres Ammoniumsalz der Formel (1), worin $R^1$,

$R^2$ und $X^-$ die angegebenen Bedeutungen haben, $R^3$ ein Alkylrest mit 8 bis 10 C-Atomen und $R^4$ ein Alkylrest mit 8 bis 10 C-Atomen oder der Benzylrest ist.

7. Tensidzusammensetzung nach einem der Ansprüche 4 bis 6, wobei die angegebene hydrophobe Gruppe im Anion-Tensid 8 bis 18 C-Atome besitzt.

8. Tensidzusammensetzung nach Anspruch 1, wobei als Anion-Tensid ein $C_8$ bis $C_{18}$-Alkansulfonat oder ein $C_8$ bis $C_{18}$-$\alpha$-Olefinsulfonat eingesetzt wird und als Kation-Tensid ein quartäres Ammoniumsalz der Formel (1), worin $R^1$, $R^2$ und $X^-$ die angegebenen Bedeutungen haben, $R^3$ ein Alkylrest mit 8 bis 10 C-Atomen und $R^4$ ein Alkylrest mit 8 bis 10 C-Atomen oder der Benzylrest ist.

9. Tensidzusammensetzung nach einem oder mehreren der Ansprüche 1 bis 8, wobei man Anion-Tensid und Kation-Tensid im Molverhältnis von 1 : (0,5 bis 5) mit Wasser in einer Menge von 60 bis 80 Gew.-%, bezogen auf die Gewichtssumme aus Anion-Tensid, Kation-Tensid und Wasser, unter Ausbildung zweier Phasen mischt.

10. Tensidzusammensetzung nach einem oder mehreren der Ansprüche 1 bis 8, wobei man Anion-Tensid und Kation-Tensid im Molverhältnis von 1 : (0,7 bis 2) mit Wasser in einer Menge von 60 bis 80 Gew.-%, bezogen auf die Gewichtssumme aus Anion-Tensid, Kation-Tensid und Wasser, unter Ausbildung zweier Phasen mischt.

11. Tensidzusammensetzung nach einem oder mehreren der Ansprüche 1 bis 10, wobei man bei einer Temperatur von 40 bis 85 °C mischt.

12. Verwendung der konzentrierten und flüssigen wasserhaltigen Tensidzusammensetzungen, erhältlich nach den Ansprüchen 1 bis 11, als Schaumunterdrückungsmittel.

**Claims**

1. A concentrated and liquid water-containing surfactant composition made from an anion surfactant and a cation surfactant, characterized in that it is obtainable by mixing at least one anion surfactant and at least one cation surfactant in a molar ratio of 1:(0.3 to 10) with water in an amount of 50 to 80 % by weight, based on the sum of the weights of anion surfactant, cation surfactant and water, at a temperature of 25 to 95 °C, with the formation of two phases, waiting until the separation of the two phases is complete, and separating off the upper desired concentrated surfactant phase from the lower salt phase, the cation surfactant being a quaternary ammonium salt of the formula $N^+(R^1,R^2,R^3,R^4)X^-$ - (1) in which $R^1$ and $R^2$ are an alkyl radical having 1 to 4 carbon atoms or an oxalkylene radical having 1 to 10 ethylene oxide units, propylene oxide units, or ethylene oxide units and propylene oxide units, $R^3$ is an alkyl radical or an alkenyl radical having 6 to 22 carbon atoms, $R^4$ is an alkyl radical or an alkenyl radical having 6 to 22 carbon atoms or the benzyl radical and $X^-$ is an anion of an inorganic or organic acid.

2. A surfactant composition as claimed in claim 1, wherein the cation surfactant is a quaternary ammonium salt of the formula (1) in which $R^1$, $R^2$, $R^3$, $R^4$ and $X^-$ have the meanings given, with the proviso that in the case that $R^3$ is alkyl having 15 to 22 carbon atoms, $R^4$ is benzyl or $R^3$ and $R^4$ contain in total at least 5 % by weight of alkenyl radicals, percentages by weight being based on the ammonium salt.

3. A surfactant composition as claimed in claim 1 or 2, wherein the anion surfactant is of the sulfonate, sulfate or carboxylate type.

4. A surfactant composition as claimed in claim 1, wherein the anion surfactant is a $C_6$-$C_{22}$-alkanesulfonate, $C_6$-$C_{22}$-$\alpha$-olefinsulfonate, ($C_6$-$C_{22}$-alkyl)arylsulfonate, N-$C_6$-$C_{22}$-acyl-N-methyl-1-aminoethane-2-sulfonate, a mono- or di-$C_6$-$C_{22}$-alkyl sulfosuccinate, the methyl ester of a $C_6$-$C_{22}$ fatty acid $\alpha$-sulfonate, $C_6$-$C_{22}$ fatty alcohol sulfate, an ethoxylated $C_6$-$C_{22}$ fatty alcohol sulfate having 1 to 20 ethylene oxide units or an ethoxylated $C_1$-$C_{10}$-alkylphenol sulfate having 1 to 20 ethylene oxide units and the cation surfactant is a quaternary ammonium salt of the formula(1)in which $R^1$, $R^2$ and $X^-$ have the meanings given, $R^3$ is an alkyl radical of 8 to 14 carbon atoms and $R^4$ is an alkyl radical of 8 to 14

carbon atoms or the benzyl radical.

5. A surfactant composition as claimed in claim 1, wherein the anion surfactant is a $C_6$-$C_{22}$-alkanesulfonate, $C_6$-$C_{22}$-$\alpha$-olefinsulfonate, ($C_6$-$C_{22}$-alkyl)benzenesulfonate, N-$C_6$-$C_{22}$-acyl-N-methyl-1-aminoethane-2-sulfonate, a mono- or di-$C_6$-$C_{22}$-alkyl sulfosuccinate, a $C_6$-$C_{22}$ fatty alcohol sulfate or an ethoxylated $C_6$-$C_{22}$ fatty alcohol sulfate having 1 to 20 ethylene oxide units and the cation surfactant is a quaternary ammonium salt of the formula (1)in which $R^1$, $R^2$ and $X^-$ have the meanings given, $R^3$ is an alkyl radical of 8 to 14 carbon atoms and $R^4$ is an alkyl radical of 8 to 14 carbon atoms or the benzyl radical.

6. A surfactant composition as claimed in claim 1, wherein the anion surfactant is a $C_6$-$C_{22}$-alkanesulfonate, $C_6$-$C_{22}$-$\alpha$-olefinsulfonate, ($C_6$-$C_{22}$-alkyl)benzenesulfonate, N-$C_6$-$C_{22}$-acyl-N-methyl-1-aminoethane-2-sulfonate, a mono- or di-$C_6$-$C_{22}$-alkyl sulfosuccinate, a $C_6$-$C_{22}$ fatty alcohol sulfate or an ethoxylated $C_6$-$C_{22}$ fatty alcohol sulfate having 1 to 20 ethylene oxide units and the cation surfactant is a quaternary ammonium salt of the formula (1) in which $R^1$, $R^2$ and $X^-$ have the meanings given, $R^3$ is an alkyl radical of 8 to 10 carbon atoms and $R^4$ is an alkyl radical of 8 to 10 carbon atoms or the benzyl radical.

7. A surfactant composition as claimed in one of claims 4 to 6, wherein the hydrophobic group mentioned in the anion surfactant has 8 to 18 carbon atoms.

8. A surfactant composition as claimed in claim 1, wherein the anion surfactant is a $C_8$-$C_{18}$-alkanesulfonate or a $C_8$-$C_{18}$-$\alpha$-olefinsulfonate and the cation surfactant is a quaternary ammonium salt of the formula (1) in which $R^1$, $R^2$ and $X^-$ have the meanings given, $R^3$ is an alkyl radical of 8 to 10 carbon atoms and $R^4$ is an alkyl radical of 8 to 10 carbon atoms or the benzyl radical.

9. A surfactant composition as claimed in one or more of claims 1 to 8, wherein the anion surfactant and the cation surfactant are mixed in a molar ratio of 1:(0.5 to 5) with water in an amount of 60 to 80 % by weight, based on the sum of the weights of anion surfactant, cation surfactant and water, with the formation of two phases.

10. A surfactant composition as claimed in one or more of claims 1 to 8, wherein the anion surfactant and the cation surfactant are mixed in a molar ratio of 1:(0.7 to 2) with water in an amount of 60 to 80 % by weight, based on the sum of the weights of anion surfactant, cation surfactant and water, with the formation of two phases.

11. A surfactant composition as claimed in one or more of claims 1 to 10, wherein the mixing is carried out at a temperature of 40 to 85 °C.

12. Use of the concentrated and liquid water-containing surfactant compositions as claimed in claims 1 to 11 as foam inhibitors.

**Revendications**

1. Composition concentrée, liquide et aqueuse de tensio-actifs comportant un tensio-actif anionique et un tensio-actif cationique, composition caractérisée en ce qu'on peut l'obtenir en mélangeant au moins un tensio-actif anionique et au moins un tensio-actif cationique selon un rapport molaire de 1:(0,3 à 10) avec de l'eau en une quantité de 50 à 80 % en poids, par rapport à la somme pondérale du tensio-actif anionique, du tensio-actif cationique et de l'eau, à une température de 25 à 95 °C avec formation de deux phases, on attend la séparation des deux phases et l'on sépare la phase concentrée supérieure voulue de tensio-actifs de la phase saline inférieure, procédé selon lequel on utilise comme tensio-actif cationique un sel d'ammonium quaternaire de formule $N^+$ ($R^1$, $R^2$, $R^3$, $R^4$) $X^-$ (1), dans laquelle $R^1$ et $R^2$ représentent chacun un reste alkyle ayant 1 à 4 atomes de carbone ou un reste oxyalkylène ayant 1 à 10 motifs oxyde d'éthylène, motif(s) oxyde de propylène ou motif(s) oxyde d'éthylène et motif(s) oxyde de propylène; $R_3$ un reste alkyle ou un reste alcényle ayant 6 à 22 atomes de carbone; $R^4$ représente un reste alkyle ou un reste alcényle ayant 6 à 22 atomes de carbone ou le reste benzyle, et $X^-$ est un anion d'un acide minéral ou organique.

2. Composition tensio-active selon la revendication 1, dans laquelle on utilise comme tensio-actif cationique un sel d'ammonium quaternaire de formule (1), dans laquelle $R^1$, $R^2$, $R^3$,$R^4$ et $X^-$ ont les sens indiqués, à la condition qu'en cas où $R^3$ représente un groupe alkyle ayant 15 à 22 atomes de carbone, $R^4$ représente un groupe benzyle ou bien $R^3$ et $R^4$ contiennent ensemble au moins 5 % en poids de restes alcényles, les pourcentages pondéraux étant rapportés au sel d'ammonium.

3. Composition tensio-active selon la revendication 1 ou 2, dans laquelle on utilise comme tensioactif anionique un tensio-actif de type sulfonate, sulfate ou carboxylate.

4. Composition tensio-active selon la revendication 1, dans le cas de laquelle on utilise comme tensio-actif anionique un alcane sulfonate en $C_6$ à $C_{22}$, un $\alpha$-oléfine sulfonate en $C_6$ à $C_{22}$, un alkyl en ($C_6$ à $C_{22}$)-arylsulfonate, un N-(acyl en $C_6$ à $C_{22}$)-N-méthyl-1-aminoéthane-2-sulfonate, un ester monoalkylique ou dialkylique (en $C_6$ à $C_{22}$) de l'acide sulfosuccinique, un [ester méthylique d'acide gras (en $C_6$ à $C_{22}$)]-$\alpha$-sulfonate, un (alcool gras en $C_6$ à $C_{22}$)-sulfate, un (alcool gras en $C_6$ à $C_{22}$ éthoxylé) sulfate comportant 1 à 20 motifs oxyde d'éthylène ou un (alkyl en $C_1$ à $C_{10}$)-phénolsulfate éthoxylé comportant 1 à 20 motifs d'oxyde d'éthylène et l'on utilise comme tensio-actif cationique un sel d'ammonium quaternaire de formule (1), dans laquelle $R^1$, $R^2$ et $X^-$ ont les sens indiqués; $R^3$ représente un reste alkyle ayant 8 à 14 atomes de carbone, et $R^4$ représente un reste alkyle ayant 8 à 14 atomes de carbone ou le reste benzyle.

5. Composition tensio-active selon la revendication 1, dans laquelle on utilise comme tensio-actif anionique un alcane sulfonate en $C_6$ à $C_{22}$,
un $\alpha$-oléfine sulfonate en $C_6$ à $C_{22}$, un (alkyl en $C_6$ à $C_{22}$)-benzène sulfonate, un N-(acyl en $C_6$ à $C_{22}$)-N-méthyl-1-aminoéthane-2-sulfonate, un ester monoalkylique ou un ester dialklylique (en $C_6$ à $C_{22}$) de l'acide sulfosuccinique, un alcool gras en ($C_6$ à $C_{22}$)-sulfate ou un (alcool gras en $C_6$ à $C_{22}$, éthoxylé) sulfate comportant 1 à 20 motifs oxyde d'éthylène et l'on utilise comme tensio-actif cationique un sel d'ammonium quaternaire de formule (1), dans laquelle $R^1$, $R^2$ et $X^-$ ont les sens indiqués, $R^3$ représente un reste alkyle ayant 8 à 14 atomes de C et $R^4$ représente un reste alkyle ayant 8 à 14 atomes de C ou le reste benzyle.

6. Composition tensio-active selon la revendication 1, dans laquelle on utilise comme tensio-actif anionique un alcane sulfonate en $C_6$ à $C_{22}$, un $\alpha$-oléfine sulfonate en $C_6$ à $C_{22}$, un (alkyl en $C_6$ à $C_{22}$)-benzène sulfonate, un N-(acyl en $C_6$ à $C_{22}$)-N-méthyl-1-aminoéthane-2-sulfonate, un ester monoalkylique ou un ester dialkylique (en $C_6$ à $C_{22}$) de l'acide sulfosuccinique, un alcool gras (en $C_6$ à $C_{22}$) sulfate ou un (alcool gras en $C_6$ à $C_{22}$, éthoxylé)-sulfate comportant 1 à 20 motifs oxyde d'éthylène, et l'on utilise comme tensio-actif cationique un sel d'ammonium quaternaire de formule (1), dans laquelle $R^1$ , $R^2$ et $X^-$ ont les sens indiqués, $R^3$ représente un reste alkyle ayant 8 à 10 atomes de carbone et $R^4$ représente un reste alkyle ayant 8 à 10 atomes de carbone ou le reste benzyle.

7. Composition tensio-active selon l'une des revendications 4 à 6, dans le cas de laquelle le groupe hydrophobe indiqué dans le tensio-actif anionique comporte 8 à 18 atomes de carbone.

8. Composition tensio-active selon la revendication 1, dans lequel on utilise comme tensio-actif anionique un alcane sulfonate en $C_8$ à $C_{18}$ ou un $\alpha$-oléfine sulfonate en $C_8$ à $C_{18}$ et l'on utilise comme tensio-actif cationique un sel d'ammonium quaternaire de formule (1), dans laquelle $R^1$, $R^2$, et $X^-$ ont les sens indiqués, $R^3$ représente un reste alkyle ayant 8 à 10 atomes de carbone, et $R^4$ un reste alkyle ayant 8 à 10 atomes de carbone ou le reste benzyle.

9. Composition tensio-active selon une ou plusieurs des revendications 1 à 8, dans le cas de laquelle on mélange du tensio-actif anionique et du tensio-actif cationique selon un rapport molaire de 1:(0,5 à 5) avec de l'eau en une quantité de 60 à 80 % en poids, par rapport à la somme pondérale de tensio-actif anionique, de tensio-actif cationique et d'eau, avec formation de deux phases.

10. Composition tensio-active selon une ou plusieurs des revendications 1 à 8, dans le cas de laquelle on mélange du tensio-actif anionique et du tensio-actif cationique selon un rapport molaire de 1:(0,7 à 2) avec de l'eau en une quantité de 60 à 80 % en poids, par rapport à la somme pondérale du tensio-actif anionique, du tensio-actif cationique et de l'eau, avec formation de deux phases.

11. Composition tensio-active selon une ou plusieurs des revendications 1 à 10 dans le cas de laquelle on effectue le mélangeage à une température de 40 à 85 °C.

12. Utilisation des compositions concentrées et liquides, aqueuses, de tensio-actifs que l'on peut obtenir selon les revendications 1 à 11, comme agent de suppression de mousse.